# EUROPEAN PATENT SPECIFICATION

(11) **EP 1 890 534 B1**
(45) Date of publication and mention of the grant of the patent: **05.03.2014**
(21) Application number: 06727059.5
(22) Date of filing: 10.05.2006
(51) Int. Cl.: A01N 31/08, A01P 7/00, A01N 25/08, A01N 25/00

(54) **A METHOD OF DELIVERING A BIOLOGICALLY ACTIVE AGENT**
VERFAHREN ZUR ABGABE EINES BIOLOGISCHEN WIRKSTOFFS
METHODE D'ACHEMINEMENT D'UN AGENT BIOACTIF

(30) Priority: 12.05.2005 GB 0509749
(43) Date of publication of application: 27.02.2008
(73) Proprietor: Exosect Limited, Colden Common Winchester SO21 1TH (GB)
(72) Inventor: HAMILTON BAXTER, Ian, Durrington Wiltshire SP4 8NQ (GB)
(74) Representative: Andrews, Paul David
(86) International application number: PCT/GB2006/001698
(87) International publication number: WO 2006/120431

(56) References cited:
- WO-A-97/33472
- WO-A-03/051112
- WO-A-2004/049807
- WO-A-2005/015993
- CHOWDHURY A B M NASIR U ET AL: "Leaf surfaces and the bioavailability of pesticide residues" PEST MANAGEMENT SCIENCE, vol. 57, no. 5, May 2001 (2001-05), pages 403-412, XP009074009 ISSN: 1526-498X
- VAKNIN Y. ET AL: "The role of electrostatic force in pollination" PLANT SYST. EVOL., vol. 222, 2000, pages 133-142, XP002404573
- DEDEJ S. ET AL.: "Effectiveness of bees in delivering the biocontrol agent B. subtilis to blueberry flowers to suppress mummy berry disease" BIOCONTROL AGENT, vol. 31, 2004, pages 422-427, XP002404702
- BARRY, J.D. ET AL: "Potential for Reducing Overflooding Ratios of Sterile Mediterranean Fruit Flies (Diptera: tephritidae) with the Use of Ginger Root Oil", FLORIDA ENTOMOLOGIST, vol. 86, 2003, pages 29-33,
- KOVACH, J. ET AL.: "Use of Honey Bees and Bumble Bees to Disseminate Trichoderma harianum 1295-22 to Strawberries for Botrytis Control", BIOLOGICAL CONTROL, vol. 18, 2000, pages 235-242,
- PRIER, K.R.S. ET AL.: "Adsorption Model of Aerosolized Bacterial Spores (Bacillus subtilis Variety niger) Onto Free-Flying Honey Bees(Hymenoptera: Apidae) and its Validation", ENVIRONMENTAL ENTOMOLOGY, vol. 30, no. 6, 2001, pages 1188-1194,
- THOMSON, S.V. ET AL.: "Dissemination of Bacteria Antagonistic to Erwinia amylovora by Honey Bees", PLANT DISEASE, vol. 76, no. 10, 31 October 1992 (1992-10-31), pages 1052-1056,

## Description

The present invention relates to a method of delivering a biologically active agent to a target site through the use of a non-target carrier organism.

There are a number of known methods for controlling insect pests these include using pesticide sprays, mating disruption techniques, and attract and kill techniques using fixed dispenser and/or trap based systems.

Pesticide sprays suffer from the disadvantage that the aerosol droplets may drift and cause pesticides to contaminate non-target zones as well as the target crop. The application of such sprays also requires specialist equipment and training for the spray applicator. Furthermore, the widespread use of chemical pesticides in crop protection has led to the development of resistance to a wide range of pesticides in many species of insect, and the resistance continues to develop. It is desirable to develop new control measures that present fewer hazards to farmers, consumers and the environment, targeting the pest species effectively and minimising the amounts of pesticidal substances used.

To overcome these problems a number of different methods of insect control have been developed.

WO 94/00980 describes a method of controlling pests, such as insects, by trapping and/or killing them or preventing them mating effectively. The method involves the use of electrostatically charged particles which adhere to the insect cuticle. The particles may comprise a pesticide, or a behaviour modifying chemical.

WO 00/01236 describes a method of controlling pests, such as insects, by trapping and/or killing them or preventing them mating effectively, wherein the pest is exposed to a composition comprising particles containing or consisting of at least one magnetic material.

WO 99/60848 describes a method of controlling pests such as insects, by at least partially coating the pest with a particulate material incorporating a killing or behaviour modifying agent, which method comprises directing, attracting or otherwise luring the pest on to, above, or otherwise adjacent to a surface bearing such a particulate material to render the material airborne by the movement of the pest on, above, or in the region of the particulate material-bearing surface.

These prior art methods may involve mating disruption techniques. Mating disruption techniques involve the use of pheromone dispensers (Howse, Stevens & Jones: Insect pheromones and their role in pest management, Chapman & Hall 1998). The dispensers, which contain a sexual attractant pheromone, are placed in a crop where the pests exist. Numerous dispensers are needed to maintain the concentration of the pheromone high enough within the crop to interfere with the ability of male species to pick up wind-borne plumes of pheromone emitted by females of the same species.

This technique suffers from the disadvantage that the dispensers must be designed to hold and liberate relatively large amounts of pheromone continuously. Because pheromones in general are expensive to synthesise in view of the high degree of purity involved, the control technique is also expensive. In addition, dispensers commonly have to be deployed at an application rate of around 400 - 1000 per hectare, which is a costly and time-consuming process.

An alternative method of achieving mating disruption without using pheromone dispensers is the Sterile Insect Technique or SIT. This technique involves the mass release of sterilised insects into the natural population. Such techniques are well-known, as are the methods of rearing sterilised insects on an artificial diet, quality control, sterilisation, and release, all of which form part of this technique. This technique is operated by international agencies such as the International Atomic Energy Authority, and is used in the control of Mediterranean fruit flies, codling moths, pink bollworms, tsetse flies and other pests.

A disadvantage of this technique is that a large number of sterilised insects must be released into the natural population, so that the probability of a non-sterile female and male insect mating is very low compared to the probability of a non-sterile insect mating with a sterile insect.

Attract and kill techniques disclosed in the prior art require dispensers containing an attractant, such as a pheromone or a kairomone, and a pesticide. The target insect will be attracted to the dispenser where it comes into contact with the pesticide which has the effect of killing it. To make such systems efficacious, high quantities of pesticide are often required. Furthermore, it is an essential feature of such attract and kill techniques that there is an attractant, to lure the insect to the dispenser. Thus, such systems are only as good as the attractants utilized. These methods, therefore, are not suitable for controlling pests where there is no attractant available, or where the attractants are not particularly efficacious.

A further disadvantage of these techniques is that the dispensers are often required in large numbers. Preparing and hanging attract and kill dispensers is accordingly a costly and time consuming process.

It is an object of the present invention to overcome at least some of the problems and disadvantages of the prior art.

According to the present invention there is provided a method of delivering a biologically active agent to a target site comprising exposing a surface of a non-target carrier organism to a carrier comprising at least one biologically active agent, wherein the non-target carrier organism delivers the biologically active agent to the target site, wherein the non-target carrier organism is a honey bee and the target site is a carrier organism that is a varroa mite; wherein the carrier is a particle having an average size diameter of 0.5 to 100 µm and comprising at least 0.01% by weight of biologically active agent, and wherein the said particle releasably adheres to the non-target carrier organism; and wherein the biologically active agent is thymol.

It will be understood that the non-target carrier organism may be attracted to dispensers containing biologically active agent, in for example a field, where the non-target carrier organism will be exposed to the biologically active agent. Alternatively, the non-target carrier organism may be exposed to the biologically active agent by passing through dispensers fitted to the entrance and/or exit of the non-target carrier organism's hive, honeycomb, nest, or place of habitation.

The term "releasably adheres" as used herein means any form of temporary attachment to the non-target carrier organism, for example, the attractive force may be electrostatic, magnetic (both temporary and permanent), chemical or physical.

Particles suitable for use in the present invention are known from WO 97/33472.

The particles of the present invention may comprise silicon dioxide, magnesium silicate, diatomeous earth, cellulose, wax, lipids, resins, ceramics or a natural or synthetic polymer (such as chitin, chitosan or rubber) or any combination thereof. The active ingredients may be incorporated in the particle by methods including the use of solvents, or by adhering to the outside of the particles.

Alternatively, the particle may be a composite particle comprising a core of inert substrate. By the term "inert" is meant a material which acts merely as a carrier for the biologically active agent. The inert substrate is preferably porous and highly absorbent. Suitable materials include those listed above for the particle. The inert substrate may have the biologically active agent associated with it by impregnation into it, or the biologically active agent may be, for example, adsorbed thereon or absorbed therein; and/or it may be coated with the biologically active agent. The term "coated" as used herein includes a partial coating of the particle. Further, the biologically active agents may be incorporated in the particle using solvents, or may adhere to the outside of the particles.

The particles may be milled down to a preferred size, range, weight or shape, such that they may detach more easily from the surface of the non-target carrier organism on contact. If the particles are too small then they may become hazardous to human health, whilst too large they will tend to fall off the non-target carrier organism before the non-target carrier organism reaches the target site.

The particles have an average particle size diameter in the range of from 0.5 to 100 µm. Preferably, the particles have an average size diameter in range of 5 to 15 µm. More preferably, the particles have an average size diameter in range of 10 to 12 µm.

The particle may comprise electrostatically charged materials or metallic materials.

Preferably, the particle comprises at least 0.01% by weight of biologically active agent. More preferably, the particle comprises at least 0.1% by weight of biologically active agent.

In order to ensure efficacy, the quantity of thymol is preferably greater than 10% by weight. The thymol is preferably present in about 20% by weight.

In the method of the present invention the particle may be transferred from the non-target carrier organism to the target site.

The present invention will further be illustrated by reference to an example.

In the example the honey bee is used to control the parasitic mite, *Varroa destructor,* which is a severe predator of honey bees. The mites attach themselves to the bodies of foraging worker honey bees. The bees return to the hive carrying the mites which, once in the hive, parasitise the larval adult bees (the brood) in the comb. Methods in current use to control *Varroa* involve fumigation of the hive with selective pesticides, or introduction of miticidal compounds which permeate the hive and which achieve concentrations high enough to kill the mites without killing the honey bees. Tn all these methods there is a high risk to the bees, especially as the concentration of the introduced toxin must be increased, or potentially harmful synergists must be used, as time goes on to compensate for the evolution of resistance in the mites.

Accordingly, the honey bees entering the hive are caused to pass through a chamber containing particles comprising thymol, which is a naturally-occurring essential oil. The returning honey bee foragers become contaminated with the particles and carry them into the hive on their bodies where they are passed onto the mites. The bees are able to remove the particulates from their bodies by their highly efficient grooming behaviour, but the mites having a protective dome shaped carapace are not able to articulate their legs or palps into such a position so as to be able to groom the particles off. The effect of the particles comprising thymol is to cause the mites to lose their grip on the body of the honey bee, whereupon the mite falls to the bottom of the beehive and dies, being unable to feed from the honey bees. Furthermore, the particles comprising thymol act as a repellent to the *Varroa* mites, further causing them to detach and fall to the bottom of the beehive. Whilst the use of thymol in the control of *Varroa* is well-known to those skilled in the art, the mode of operation of the present invention is not known and overcomes the disadvantages associated with the traditional ways in which thymol is utilized.

Traditional thymol systems utilize much higher doses of thymol in order to be efficacious. Thymol, although a derivative of the essential oil Thyme Oil, carries a strong odor and use of very high doses can contaminate honey in the beehive, making it inedible. Moreover, traditional thymol products are placed in the hive which requires that the beehive be opened and causes the bees to be disturbed. In addition, traditional thymol products for *Varroa* control act in the vapour phase and the high concentration that needs to be achieved may result in bees being repelled from the beehive. The present invention overcomes the limitations of traditional thymol products as much lower doses of thymol can be utilized, because the particles comprising thymol come into direct contact with the *Varroa* and it is not necessary to achieve a high vapour pressure in the hive. Using the bees to deliver the particles comprising thymol means that the system is highly targeted and the beehive does not have to be opened.

## Claims

1. A method of delivering a biologically active agent to a target site comprising exposing a surface of a non-target carrier organism to a carrier comprising at least one biologically active agent, wherein the non-target carrier organism delivers the biologically active agent to the target site,
wherein the non-target carrier organism is a honey bee and the target site is a target organism that is a Varroa mite;
wherein the carrier is a particle having an average size diameter of 0.5 to 100µm and comprising at least 0.01% by weight of biologically active agent, and wherein the said particle releasably adheres to the non-target carrier organism; and
wherein the biologically active agent is thymol.

2. The method as claimed in claim 1, wherein pest control is caused by transference of the biologically active agent from the non-target carrier organism to the target site.

3. The method as claimed in claim 1 or claim 2, wherein the non-target carrier organism is exposed to the biologically active agent contained within a dispenser.

4. The method as claimed in any preceding claim, wherein the particle is a composite particle and comprises a core of inert substrate which is impregnated with and/or coated with the biologically active agent.

5. The method as claimed in claim 4, wherein the core comprises silicon dioxide, magnesium silicate, diatomaceous earth, cellulose, wax, lipids, resins, ceramics, a natural or synthetic polymer or any combination thereof.

6. The method as claimed in any preceding claim, wherein the particle comprises electrostatically charged materials or metallic materials.

7. The method as claimed in any preceding claim, wherein the particle is transferred from the non-target carrier organism to the target site.

## Patentansprüche

1. Verfahren zur Abgabe eines biologischen Wirkstoffs an einem Zielort, umfassend das Exponieren einer Oberfläche eines Nicht-Ziel-Trägerorganismus gegenüber einem Träger, der mindestens einen biologischen Wirkstoff umfasst, wobei der Nicht-Ziel-Trägerorganismus den biologischen Wirkstoff an den Zielort abgibt,
wobei es sich bei dem Nicht-Ziel-Trägerorganismus um eine Honigbiene handelt und wobei der Zielort ein Zielorganismus ist, bei dem es sich um eine Varroa-Milbe handelt;
wobei es sich bei dem Träger um ein Teilchen mit einem durchschnittlichen Größendurchmesser von 0,5 bis 100 µm, das mindestens 0,01 Gew.-% biologischen Wirkstoff umfasst, handelt, und wobei das Teilchen lösbar an dem Nicht-Ziel-Trägerorganismus haftet; und
wobei es sich bei dem biologischen Wirkstoff um Thymol handelt.

2. Verfahren nach Anspruch 1, wobei die Schädlingsbekämpfung durch die Übertragung des biologischen Wirkstoffs von dem Nicht-Ziel-Trägerorganismus an den Zielort verursacht wird.

3. Verfahren nach Anspruch 1 oder Anspruch 2, wobei der Nicht-Ziel-Trägerorganismus gegenüber dem innerhalb eines Abgabebehälters enthaltenen biologischen Wirkstoff exponiert wird.

4. Verfahren nach einem vorhergehenden Anspruch, wobei das Teilchen ein Verbundteilchen ist und einen Kern aus inertem Substrat, das mit dem biologischen Wirkstoff imprägniert und/oder beschichtet ist, umfasst.

5. Verfahren nach Anspruch 4, wobei der Kern Silika, Magnesiumsilikat, Diatomeenerde, Cellulose, Wachs, Lipide, Harze, Keramikmaterialien, ein natürliches oder synthetisches Polymer oder eine beliebige Kombination davon umfasst.

6. Verfahren nach einem vorhergehenden Anspruch, wobei das Teilchen elektrostatisch geladene Materialien oder metallische Materialien umfasst.

7. Verfahren nach einem vorhergehenden Anspruch, wobei das Teilchen von dem Nicht-Ziel-Trägerorganismus auf den Zielort übertragen wird.

## Revendications

1. Procédé d'administration d'un agent biologiquement actif à un site cible comprenant l'exposition d'une surface d'un organisme véhicule non-cible à un véhicule comprenant au moins un agent biologiquement actif, l'organisme véhicule non-cible délivrant l'agent biologiquement actif au site cible, l'organisme véhicule non-cible étant une abeille et le site cible étant un organisme cible qui est une mite varroa ;
le véhicule étant une particule ayant une taille moyenne en diamètre de 0,5 à 100 µm et comprenant au moins 0,01 % en poids d'agent biologiquement actif, et ladite particule adhérant de façon amovible à l'organisme véhicule non-cible ; et
l'agent biologiquement actif étant le thymol.

2. Procédé selon la revendication 1, dans lequel la lutte contre les organismes nuisibles est causée par le transfert de l'agent biologiquement actif de l'organisme véhicule non-cible au site cible.

3. Procédé selon la revendication 1 ou la revendication 2, dans lequel l'organisme véhicule non-cible est exposé à l'agent biologiquement actif contenu dans un distributeur.

4. Procédé selon l'une quelconque des revendications précédentes, dans lequel la particule est une particule composite et comprend un noyau de substrat inerte qui est imprégné avec et/ou revêtu avec l'agent biologiquement actif.

5. Procédé selon la revendication 4, dans lequel le noyau comprend le dioxyde de silicium, le silicate de magnésium, la terre de diatomées, la cellulose, une cire, des lipides, des résines, des céramiques, un polymère naturel ou synthétique ou une combinaison quelconque de ceux-ci.

6. Procédé selon l'une quelconque des revendications précédentes, dans lequel la particule comprend des matériaux électrostatiquement chargés ou des matériaux métalliques.

7. Procédé selon l'une quelconque des revendications précédentes, dans lequel la particule est transférée de l'organisme véhicule non-cible au site cible.
